# EUROPÄISCHE PATENTSCHRIFT

(11) **EP 0 294 644 B1**
(45) Veröffentlichungstag und Bekanntmachung des Hinweises auf die Patenterteilung: **27.01.1993**
(21) Anmeldenummer: 88108269.7
(22) Anmeldetag: 24.05.1988
(51) Int. Cl.: H04Q 11/04, H04Q 3/545

(54) **Verfahren zum Betrieb einer Schaltungsanordnung für eine zentralgesteuerte Fernmeldevermittlungsanlage, insbesondere PCM-Fernsprechvermittlungsanlage mit einem Zentralteil und mit mit diesem verbundenen Anschlussgruppen**
Method for operating of a circuit arrangement for a centrally controlled telecommunication exchange, especially a PCM telephone exchange, with a central part and with connection groups connected to this central part
Procédé pour le fonctionnement d'un montage pour un central de télécommunication, à commande centralisée, en particulier un central téléphonique MIC avec une partie centrale et avec des groupes de connexion connectés à cette partie centrale

(30) Priorität: 11.06.1987 DE 3719517
(43) Veröffentlichungstag der Anmeldung: 14.12.1988
(73) Patentinhaber: SIEMENS AKTIENGESELLSCHAFT, 80333 München (DE)
(72) Erfinder: Baur, Hans, Dr., D-8130 Starnberg (DE); Bittermann, Hans, D-8027 Neuried (DE)

(56) Entgegenhaltungen:
- EP-A- 0 162 970
- DE-A- 3 329 556
- DE-A- 3 634 863
- TELCOM REPORT - BEIHEFT DIGITALVERMITTLUNGSSYSTEM EWSD, Band 4, 1981, Seiten 13-18, München, DE; H. EBERDING: "Die Software im System EWSD"
- IBM TECHNICAL DISCLOSURE BULLETIN, Band 13, Nr. 5, Oktober 1970, Seite 1203, New York, US; B.B. YOUNG et al.: "Remote initial program load and library maintenance for satellite computers"
- PATENT ABSTRACTS OF JAPAN, Band 8, Nr. 155 (E-256)[1592], 19. Juli 1984 & JP-A-59 58 995
- TELCOM REPORT - BEIHEFT DIGITALVERMITTLUNGSSYSTEM EWSD, Band 4, 1981, Seiten 19-27, München, DE; R. BORGER et al.: "Periphere Anschlussgruppen im System EWSD"
- GTE AUTOMATIC ELECTRIC WORLD-WIDE COMMUNICATIONS JOURNAL, Band 20, Nr. 2, März/April 1982, Seiten 50-56, Northlake, Illinois, US; D. JACKSON et al.: "Impacts of multiprocessing on GTD-5 EAX call processing and related operating system software and data base"
- IEEE GLOBAL TELECOMMUNICATION CONFERENCE, 28. November - 1. Dezember 1983, San Diego, Band 2, Seiten 622-625, IEEE, New York, US; M.J. GOLASZEWSKI et al.: "Decoupled software recovery concepts in a distributed processing environment"
- TELCOM REPORT, Band 7, Nr. 2, März/April 1984, Seiten 93-98, Passau, DE; H. KNAPEK et al.: "Sicherungstechnik im Koordinationsprozessor SSP112D des Digitalvermittlungssystems EWSD"
- TELESIS, Band 12, Nr. 3, 1985, Seiten 13-19, Ottawa, CA; N. ASAM et al.: "The meridian DV-1: system architecture"
- IEEE MILITARY COMMUNICATIONS CONFERENCE, 20.-23. Oktober 1985, Boston, MA, Band 2, Seiten 655-659, IEEE, New York, US; A.J.W. VAN DAAL: "DELTACS - a military telecommunication system"
- TELCOM REPORT, Band 9, Nr. 1, Januar/Februar 1986, Seiten 22-26, Berlin, DE; A.D. LEICHUM et al.: "Behandlung der Datenbasis bei der Inbetriebnahme und bei Erweiterungen von EWSD-Vermittlungsstellen"

## Beschreibung

Die Erfindung betrifft ein Verfahren zum Betrieb einer Schaltungsanordnung für eine zentralgesteuerte Fernmeldevermittlungsanlage, insbesondere PCM-Fernsprechvermittlungsanlage, mit einem ein Zentralkoppelfeld und einen zentralen Koordinationsprozessor umfassenden Zentralteil und mit dezentralen Anschlußgruppen, die je ein mit dem Zentralkoppelfeld über zur Herstellung gewählter Verbindungen belegbare Verbindungswege, zum Beispiel Leitungen, Kanäle oder dergleichen, verbundenes Teilkoppelfeld, sowie ein u.a. einer Verbindungsdurchschaltung über dieses dienendes programmgesteuertes Teilsteuerwerk umfassen, und an die über verbindungsindividuelle und/oder teilnehmerindividuelle Leitungsabschlußschaltungen Teilnehmerleitungen und/oder Verbindungsleitungen angeschlossen, bzw. ihnen entsprechende, in Übertragungssystemen, zum Beispiel PCM-Systemen, zusammengefaßte Kanäle angeschaltet sind, und mit einem von dem Koordinationsprozessor zu den Teilsteuerwerken verlaufenden Steuerkanal, insbesondere mit gleichartig verlaufenden, einzeln pro Teilsteuerwerk vorgesehenen Steuerkanälen, über den, insbesondere über die vom Koordinationsprozessor in Zusammenhang mit dem vermittlungstechnischen Betriebsbeginn jeweils einer Anschlußgruppe aus einem diesem Prozessor zugeordneten zentralen Speicher entnommene Peripheriedaten zu jener hin übertragen werden, zu deren jeweils semipermanenter Speicherung dieser Anschlußgruppe jeweils ein Speicher zugeordnet ist, und die teils Programminformationen für ihre vermittlungstechnischen Programmsteuerungsabläufe sind, und teils den Leitungsabschlußschaltungen, bzw. den angeschalteten Kanälen, individuell zugeordnete und für den Vermittlungsbetrieb im Einzelfall vermittlungssteuerungstechnisch maßgebliche Anschlußdaten sind, wie zum Beispiel Teilnehmerrufnummer-Teilnehmeranschlußlage-Zuordnungsdaten, Betriebszustandsdaten, Betriebskategorien-Daten, Teilnehmerart-Daten, Verbindungsleitungs- und -kanalartdaten und dergleichen.

Schaltungsanordnungen dieser Art sind bereits durch die europäischen Patentschriften 0 006 132 (VPA 78 P 6109) und 0 058 750 (VPA 81 P 6209) bekannt. Darin ist also ein zur Abwicklung der Schaltvorgänge des gesamten Informationsaustausches zwischen zentralem Koordinationsprozessor einerseits und jedem der Teilsteuerwerke andererseits erforderlicher Steuerweg vorgesehen. Hierzu sind aber so viele Steuerkanäle vorgesehen, wie Teilsteuerwerke vorhanden sind. Jedes Teilsteuerwerk ist also mit einem eigenen Steuerkanal ausgestattet. Die Vielzahl dieser teilsteuerwerksindividuellen Steuerkanäle ist über das zentrale Koppelfeld bereitgestellt; sie werden also über dasselbe durchgeschaltet und ständig in betriebsbereitem Zustand gehalten.

Der teilsteuerwerks-individuelle Steuerkanal dient im laufenden Vermittlungsbetrieb über die betreffende Anschlußgruppe in der Hauptsache dem Austausch von Informationen und Steuersignalen mit dem Koordinationsprozessor. Dabei hat das betreffende Teilsteuerwerk über den Steuerkanal Zugang zum Koordinationsprozessor; ebenso hat dieser jederzeit Zugriff zum Teilsteuerwerk. Die genannten Informationen können z..B. diejenigen Informationen sein, die innerhalb einer Anschlußgruppe vom betreffenden Teilsteuerwerk teilnehmerindividuell oder verbindungsleitungsindividuell laufend gesammelt werden, und die zur Verarbeitung im zentralen Koordinationsprozessor bestimmt sind. Bei diesen Informationen kann es sich z.B. um die Wahlinformationen von wählenden Teilnehmern handeln, sowie um weitere Schaltkennzeichen, die im Zusammenhang von herzustellenden oder hergestellten Verbindungen in der betreffenden Anschlußgruppe eintreffen und ebenfalls vom zentralen Koordinationsprozessor teilnehmerindividuell oder verbindungsleitungsindividuell zu verarbeiten und deshalb jenem zuzuleiten sind. Bei den genannten Steuersignalen für den laufenden Vermittlungsbetrieb kann es sich um Informationen handeln, die zur Durchschaltung von gewählten Verbindungen innerhalb der jeweiligen Anschlußgruppe, und zwar über das zu ihr gehörende Teilkoppelfeld dienen. Solche Verbindungen verlaufen über das zentrale Koppelfeld und i.d.R. über die Teilkoppelfelder von zwei verschiedenen Anschlußgruppen.

Prozessoren und Steuerwerke der hier angesprochenen Art sind bekanntlich programmgesteuert. Entsprechende Programminformationen sind im zentralen Koordinationsprozessor und in den Teilsteuerwerken gespeichert. Anhand dieser Programminformationen ist dem Koordinationsprozessor und den Teilsteuerwerken vorgegeben, in welcher Weise und nach welchem Schema sie sämtliche Verarbeitungsprozeduren abzuwickeln haben. Das Prinzip solcher programmgesteuerter Datenverarbeitungsanlagen ist in großer Vielfalt und in vielen Variationen bekannt.

Die Arbeitsweise des zentralen Koordinationsprozessors einerseits und der dezentralen Teilsteuerwerke andererseits ist nicht nur durch die betreffenden Programminformationen vorgegeben, sondern auch durch den gesamten Aufbau einer entsprechenden Fernmeldevermittlungsanlage. Dieser Aufbau betrifft nicht nur den inneren Aufbau des zentralen Koppelfeldes und dessen Verbindungen über die genannten Verbindungswege mit den Teilkoppelfeldern der Anschlußgruppen und den der Anschlußgruppen selber, insbesondere ihrer Teilkoppelfelder, sondern auch die Beschaltung jedes der Teilkoppelfelder der Gesamtheit der Anschlußgruppen mit Teilnehmer- und Verbindungsleitungen sowie deren Betriebsbedingungen. Deshalb sind in jedem Teilsteuerwerk außer den betreffenden Programminformationen auch die eingangs ebenfalls bereits erwähnten Anschlußdaten zu speichern, die -wie angegeben - u.a. den Aufbau und die Beschaltung der Anschlußgruppe mit Teilnehmer- und/oder Verbindungsleitungen betreffen. Diese Anschlußdaten geben an, welche Leitung wo angeschlossen ist, welcher Art die jeweilige Leitung ist, welche Bedingungen für eine Verbindungsherstellung gelten u. dgl., wie eingangs im einzelnen bereits angegeben ist.

Die in jeder der Anschlußgruppen zu speichernde Programminformation und die die Beschaltung jeder der Anschlußgruppen mit Teilnehmer- und Verbindungsleitungen angegebenen Anschlußdaten bilden insgesamt einen umfassenden Datenbestand. Dieser ist für die Gesamtheit einer zentralgesteuerten Fernmeldevermittlungsanlage der angesprochenen Art zunächst also für alle ihre Anschlußgruppen an zentraler Stelle gesammelt gespeichert. So enthält zu Betriebsbeginn einer derartigen Fernmeldevermittlungsanlage der zentrale Koordinationsprozessor die zur Abwicklung des Vermittlungsbetriebes erforderliche gesamte Programminformation sowie die jede der Anschlußgruppen betreffenden gesamten Anschlußdaten nicht nur für den eigenen Bedarf sondern zugleich auch für sämtliche Teilsteuerwerke.

Bei Inbetriebnahme einer Fernmeldevermittlungsanlage der eingangs umrissenen Art ist deshalb vom zentralen Koordinationsprozessor zu jeder der Anschlußgruppen die entsprechende Programminformation sowie der jeweils erforderliche, betreffende Anschlußdaten-Bestand zu übertragen. In Anordnungen der bekannten Art werden hierfür die teilsteuerwerks-individuellen Steuerkanäle verwendet.

In Fernsprechvermittlungsanlagen der genannten bekannten Art ist also im Zusammenhang der zuvor beschriebenen Sachverhalte vorgesehen, daß für den laufenden Vermittlungsbetrieb die zur Abwicklung desselben erforderliche Programminformation in oder bei jedem Teilsteuerwerk gespeichert wird. Ebenso sind die zur Abwicklung des Vermittlungsbetriebes erforderlichen, den Aufbau und die Beschaltung einer jeden Anschlußgruppe mit Teilnehmer-und Verbindungsleitungen angebenden Anschlußdaten vom zentralen Koordinationsprozessor einzeln an die Teilsteuerwerke jeder der verschiedenen Anschlußgruppen zu übertragen und hier zu speichern.

Diese Übertragung und Speicherung der gesamten Programminformation sowie der gesamten Anschlußdaten erfordert bei Fernsprechvermittlungsanlagen der angegebenen bekannten Art einen nicht unwesentlichen Zeitbedarf. Bis zur Abwicklung dieser gesamten Übertragungs- und Speicherungsprozeduren kann in solchen Anlagen der Vermittlungsbetrieb noch nicht gestartet werden. Da die Programminformation i.d.R. für die verschiedenen Anschlußgruppen gleich ist, wird sie in den angesprochenen Fällen nach einem bekannten Broadcast-Verfahren auch gleichzeitig an alle Teilsteuerwerke übertragen und gespeichert, was hierbei eine teilweise Wiedereinsparung eines entsprechenden Anteils vom betreffenden Übertragungs- und Speicherungszeitbedarf möglich macht. Jedoch sind die Anschlußdaten anschlußgruppenindividuell zu übertragen, was eine Übertragungs-und Speicherungsprozedur einzeln für jede der Anschlußgruppen, d.h. pro Teilsteuerwerk erforderlich macht und damit einen ungünstig hohen Zeitbedarf erfordert. Hierdurch verzögert sich nach Inbetriebnahme bzw. Wiederinbetriebnahme einer Fernsprechvermittlungsanlage der bekannten Art der Beginn des Vermittlungsbetriebes, also der Zeitpunkt, zu welchem die Herstellung gewählter Verbindungen gestartet wird.

Die Übertragung der gesamten Programminformation sowie der gesamten Anschlußdaten zu jeder der einzelnen Anschlußgruppen erfolgt darüber hinaus zweckmäßigerweise nach den Regeln eines Übertragungsverfahrens, das für den laufenden Vermittlungsbetrieb optimal angepaßt und deshalb vorgesehen ist. Für den laufenden Vermittlungsbetrieb werden die betreffenden Daten (Wahlinformationen, Schaltkennzeichen, Steuerungssignale u.dgl., s.o.!) in Portionen jeweils solchen Umfanges, also in einem solchen Datenformat ausgetauscht, das den Bedingungen des laufenden Vermittlungsbetriebes optimal angepaßt ist, wobei ein entsprechend gesichertes Übertragungsverfahren wesentlich ist. Diese Informationen liegen durchweg in kleineren Portionen vergleichbarer Größenordnung vor. Durch eine Anwendung dieses Übertragungsverfahrens auch für die Übertragung von Programminformationen und Anschlußdaten erhöht sich der Zeitbedarf bis zum Beginn des Vermittlungsbetriebes in bekannten derartigen Anlagen noch zusätzlich.

Die individuelle Übertragung der Anschlußdaten zu jeder der Anschlußgruppen insbesondere nach den für den laufenden Vermittlungsbetrieb vorgesehenen Regeln hat zur Folge, daß insgesamt bei der Inbetriebnahme einer Fernmeldevermittlungsanlage der eingangs genannten bekannten Art für die Ladung der Teilsteuerwerke mit der Programminformation und mit den jeweiligen Anschlußdaten ein relativ großer Zeitbedarf entsteht, insbesondere für letztere. Es besteht deshalb u.a. für die Erfindung die Aufgabe, den bei der Inbetriebnahme einer Fernmeldevermittlungsanlage der eingangs genannten Art entstehenden Zeitbedarf herabzusetzen, also nach einer Inbetriebnahme bzw. Wiederinbetriebnahme mit dem Vermittlungsbetrieb früher beginnen zu können.

Dieser Zeitbedarf fällt in besonderer Weise ins Gewicht bei solchen kurzzeitigen Betriebsunterbrechungen, in deren Zusammenhang auch eine erneute Übertragung der Peripheriedaten vom Zentralprozessor an die Teilsteuerwerke notwendig wird, was insbesondere auch gilt für Betriebsfälle, in denen während des laufenden Vermittlungsbetriebes aufgrund von eingetretenen Störungen oder festgestellten Fehlern in der Funktionsweise oder in den Peripheriedaten Abhilfemaßnahmen erforderlich werden. Ebenso wird auch bei gezielten Änderungen in der Arbeitsweise und/oder der Beschaltung der Anschlußgruppen sowie der Betriebsweise von Teilnehmeranschlüssen und Verbindungsleitungen, bzw. entsprechenden Kanälen, eine Übertragung der betreffenden Peripheriedaten -i.d.R. sogar der Gesamtheit der Peripheriedaten oder nur der der Anschlußdaten - vom Zentralprozessor an die Teilsteuerwerke der Anschlußgruppen erforderlich. Der erwähnte Zeitbedarf fällt also ganz allgemein immer dann durch eine Verzögerung des Beginns des Vermittlungsbetriebes nachteilig ins Gewicht, wenn auch eine Übertragung der Anschlußdaten und gegebenenfalls auch der Programminformation vom jeweiligen zentralen Prozessor zu den Anschlußgruppen erforderlich ist. Durch die Erfindung soll erreicht werden, daß möglichst bald nach Inbetriebnahme, Wiederinbetriebnahme (wegen eingetretener Betriebsunterbrechung) oder nach einer ähnlichen Maßnahme der Vermittlungsbetrieb zur Herstellung von teilnehmerseitig gewählten Verbindungen beginnen kann.

Aus IBM Technical Disclosure Bulletin, Band 13. Nr. 5, Oktober 1970, Seite 1203, New York, US; B.B. Joung et al.: "Remote Initial Programm Load And Library Maintenance For Satellite Computers" ist die Programmladeprozedur einer Datenverarbeitungsanlage bekannt, die aus einem zentralen Computer und einer Mehrzahl von abgesetzten Computern besteht. Es finden hier im Zusammenhang mit der Inbetriebnahme neben Selbstladeprozessen von Einrichtungen am Ort der Peripheriecomputer auch Teilübertragungen vom zentralen Computer aus in der Weise statt, daß den Peripheriecomputern jeweils Teile der gerade benötigten Programminformationen übertragen werden. Die vollständige Programminformation steht den Peripheriecomputern demnach nach erst nach längerer Betriebsdauer zur Verfügung. Andere Arten von Informationen als die erwähnten Programminformationen sind hier im Gegensatz zu den obenstehend geschilderten Verhältnissen bei Fernsprechvermittlungsanlagen, auf die die Erfindung Bezug nimmt, nicht zu übertragen.

Die Erfindung löst die gestellte Aufgabe dadurch, daß die Übertragung der Peripheriedaten an jede der Anschlußgruppen in einen vor jeweiligem Beginn ihres vermittlungstechnischen Betriebsablaufes durchgeführten ersten Übertragungsprozeß einerseits und einen zweiten Übertragungsprozeß nach Beginn des vermittlungstechnischen Betriebsablaufes andererseits unterteilt ist, und daß der erste Übertragungsprozeß die Übertragung der Peripheriedaten zunächst auf die der Programminformationen beschränkt, und daß der zweite Übertragungsprozeß in eine Vielzahl einzelner Übertragungs-Teilvorgänge aufgeteilt ist, die während des bereits gestarteten Betriebsablaufes so in den diesem dienenden vermittlungstechnischen Datenaustausch zwischen dem Zentralprozessor und den Teilsteuerwerken eingefügt sind, daß bei jeweils erstmalig nach dem betreffenden Beginn des vermittlungstechnischen Betriebsablaufes erfolgender ankommender oder abgehender Belegung jeweils einer der Leitungsabschlußschaltungen, bw. eines der entsprechenden angeschalteten Kanäle, die jeweils sämtliche der betreffenden leitungsindividuellen, bzw. kanalindividuellen Anschlußdaten, die gegebenenfalls von dem jeweils betreffenden Teilsteuerwerk zunächst angefordert werden, vom Zentralprozessor einzeln, d.h. pro Leitungsabschlußschaltung, bzw. pro entsprechenden Kanal, zu der jeweils betreffenden Anschlußgruppe übertragen und in deren Speicher gespeichert werden.

Durch die Erfindung wird der durch den zentralen Prozessor zu leistende datenübertragungstechnische Arbeitsaufwand zeitlich verteilt. Es werden jeweils immer nur diejenigen Anschlußdaten vom zentralen Prozessor zu einer der Anschlußgruppen übertragen und hier gespeichert, die jeweils für eine Verbindungsherstellung gerade unmittelbar gebraucht werden. Erfolgt über einen Anschluß ein Teilnehmeranruf oder wird eine angeschlossene Teilnehmerstelle angewählt oder wird eine an einem Anschluß liegende Verbindungsleitung bzw. ein entsprechender Kanal ankommend oder abgehend belegt, so werden jeweils die pro Anschluß insgesamt vorhandenen Anschlußdaten insbesondere zusammenhängend vom zentralen Prozessor an die betreffende Anschlußgruppe übertradie Anschlußdaten vom zentralen Prozessor zu den Anschlußgruppen übertragen und hier gespeichert. Nach einer längeren Betriebszeit von zum Beispiel einer halben Stunde oder einer ganzen Stunde wird dann die Übertragung der restlichen, bis dahin noch nicht vom zentralen Prozessor zu den Anschlußgruppen übertragenen Anschlußdaten bewerkstelligt. Dies kann auch hinausgeschoben werden bis zum Eintritt einer Betriebssituation, die durch eine besonders niedrige verkehrsmäßige Belastung des zentralen Prozessors gekennzeichnet ist, z.B. in der Nacht.

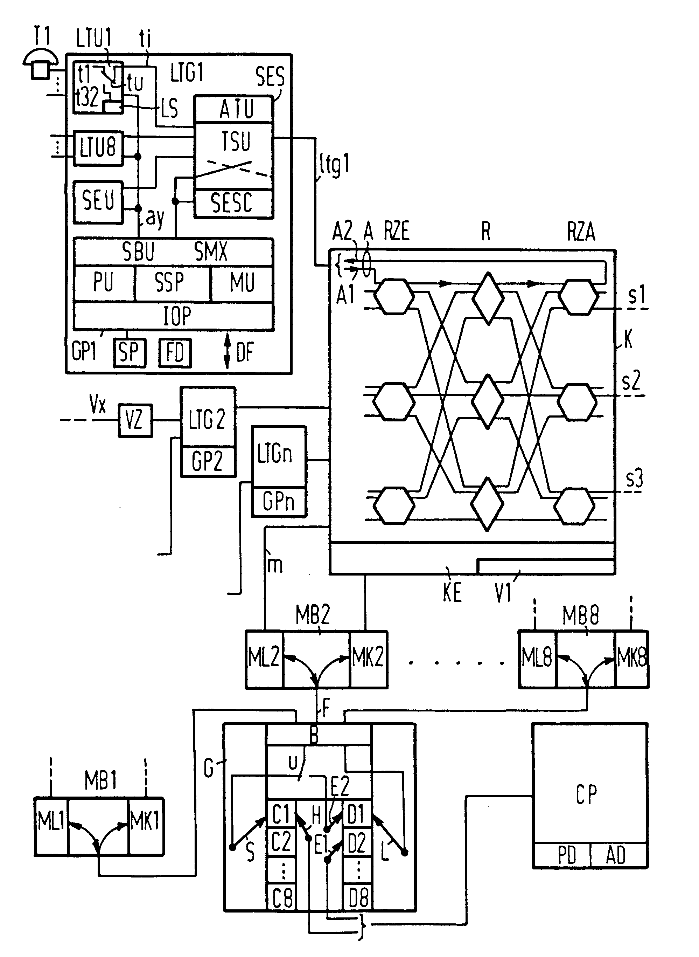

In der Zeichnung ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden rechnergesteuerten Fernsprechvermittlungsanlage ein. Erst weiter unten werden die erfindungsgemäßen Besonderheiten dieser Vermittlungsanlage erläutert.

Ein in drei Koppelstufen RZE, R und RZA aufgebautes Koppelfeld, das also ein zentrales Koppelfeld ist, weist eingangsseitig eine große Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungsrichtung durch entsprchende Pfeile angedeutet.

Die Koppelvielfache der ersten Koppelstufe RZE sind kombinierte Zeitlage-Raumlage-Vielfache, wie die dargestellten Symbole erkennen lassen. Die Koppelvielfache der mittleren Koppelstufe R sind Raumlagevielfache. Die Koppelvielfache der letzten Koppelstufe RZA sind wieder Raumlage-Zeitlage-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art. Das zentrale Koppelfeld kann aus mehreren Teilen der dargestellten Art bestehen, die in der z.B. durch die deutsche Patentschrift 15 37 849 (VPA 67/3047) bekannten Weise über Zeitmultiplexzwischenleitugen (s1 - s3) untereinander verbunden sind. In diesem Falle stellen diese mehreren Teile also zusammen das zentrale Koppelfeld dar.

An die Koppelfeldanschlüsse, zum Beispiel A, des in der zuvor angegebenen Weise aus mehreren Koppelfeldteilen (K) bestehenden zentralen Koppelfeldes, sind über für jeweils beide Nachrichtenübertragungsrichtungen ausgelegte Zeitmultiplexleitungen, zum Beispiel die Zeitmultiplexleitung ltg1, Anschlußgruppen, zum Beispiel die Anschlußgruppe LTG1 (Line Trunk Group), einzeln angeschlossen. Eine solche Anschlußgruppe ist eingangsseitig über verbindungsindividuelle und/oder teilnehmerindividuelle Leitungsabschlußschaltungen mit Teilnehmerleitungen (analog und/oder digital), Analog-Verbindungsleitungen und/oder mit verbindungsindividuell belegbare Kanäle zusammenfassenden PCM-Verbindungsleitungen (alternativ sowie auch in Kombination) beschaltet. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktion erforderlichen Einrichtungen enthalten (vgl. NTZ Bd. 33/180, Heft 10, Seiten 646 bis 652, und 1978 International Zurich Seminar on Digital Communications, Proceedings IEEE Catalogue, Nr. 78CH 1325-0 ASST, Seiten B2-1, A4.1, auch die deutsche Patentanmeldung P 31 00 811.9/ VPA 81 P 6201; P 31 04 002.0/VPA 81 P 6203 und P 31 06 903.7/VPA 81 P 6209).

In einer Anschlußgruppe sind als Teilnehmeranschlußschaltungen ausgebildete Leitungsabschlußschaltungen für die Teilnehmerstationen einzeln vorgesehen oder zu Mehrfach-Teilnehmeranschlußschaltungen LTU1 - LTU8 zusammengefaßt. Entsprechendes gilt für Leitungsabschlußschaltungen für Verbindungsleitungen und entsprechende Kanäle. Die betreffenden Leitungsabschlußschaltungen - in der genannten Weise gegebenenfalls jeweils zu mehreren zusammengefaßt - enthalten u.a. Speicher LS für Anschlußdaten, die in Zuordnung zu den einzelnen Teilnehmer- und Verbindungsleitungs-Anschlüssen (sowie zu den entsprechend angeschlossenen Kanälen) gespeichert werden. Es handelt sich dabei um Daten, die die Arbeitsweise dieser Anschlußschaltungen festlegen. Diese Daten sind für Abwicklung und Ablauf des Vermittlungsbetriebes maßgeblich in Bezug auf die jeweils betreffenden Teilnehmerleitungen, Verbindungsleitungen und entsprechenden Kanäle. Sie geben z.B. die Teilnehmerrufnummer-Teilnehmeranschlußlage-Zuordnung pro Teilnehmerstelle, Betriebszustandsdaten (frei, besetzt u.dgl.), Betriebskategorien-Daten (Zulassung von sog. Facilities), Teilnehmerart-Daten (z.B. Fernsprechteilnehmer, Münzer, Telekopierer u.dgl.), Verbindungsleitungsart-Daten (Signalisierung mit Gleichstromzeichen, Induktivwahl u.dgl.), Kanalart-Daten (Trägerfrequenz, PCM u. dgl.) und weitere, an. Diese Daten sind also Anschlußdaten. Sie gehören zu den Peripheriedaten und werden dezentral semipermanent in den Anschlußgruppen, z.B. den bereits genannten Speichern LS, oder in einem für die jeweilige Anschlußgruppe gemeinsamen Speicher SP gespeichert. Sie sind zumindest zentral in einem dem zentralen Steuerwerk CP zugeordneten Speicher AD (vgl. DE-OS 28 28 841 = VPA 78 P 6119) gespeichert und werden von hier in Zusammenhang mit einer Inbetriebnahme oder Wiederinbetriebnahme nach einer Betriebsunterbrechung (z.B. störungsbedingt) der Fernsprechvermittlungsanlage zu den jeweils betreffenden Anschlußgruppen übertragen und dort gespeichert.

Ferner gehören zu den genannten Peripheriedaten auch Programminformationen, die ebenfalls zunächst in einem Speicher PD des zentralen Steuerwerkes CP zentral gespeichert sind und von hier in Zusammenhang mit einer Inbetriebnahme oder Wiederinbetriebnahme zu den Anschlußgruppen übertragen und hier in einem jeweils einer Anschlußgruppe gemeinsamen Speicher z.B. PU dezentral semipermanent gespeichert werden. Diese Programminformationen dienen in einer Anschlußgruppe für deren dezentrales Steuerwerk zur programmgesteuerten Abwicklung der vermittlungstechnischen Verarbeitungs- und Steuerungsabläufe. Diese Programminformationen können gänzlich oder teilweise gleichlautend sein von Anschlußgruppe zu Anschlußgruppe. Sie können deshalb vom zentralen Steuerwerk CP auch gleichzeitig an alle Anschlußgruppen übertragen werden. Sie können auch teilweise bereits mit der Herstellung in den Anschlußgruppen eingespeichert werden.

Eine Anschlußgruppe umfaßt ferner ein Teilkoppelfeld TSU und eine zu dessen Steuerung durch ein Teilsteuerwerk, z.B. GP1, dienende Einstelleinrichtung SESC. Ein Teilkoppelfeld (z.B. TSU) ist also das Koppelfeld einer Anschlußgruppe; dagegen ist ein (weiter oben erwähnter) Koppelfeldteil (K) ein Teil des aus mehreren solchen Koppelfeldteilen in der angegebenen Weise zusammengefügten zentralen Koppelfeldes.

In der Zeichnung ist unter anderem die Anschlußgruppe LTG1 gezeigt. Deren Aufbau und Arbeitsweise sind ausführlich in der DE-OS 28 26 113 ab Seite 6 unten beschrieben. Ferner ist auf die Beschreibung des Fernsprechvermittlungssystems EWSD im Beiheft zum 4. Jahrgang (1981) der Zeitschrift "telcom report" und auf das USA-Patent 4 564 725 hinzuweisen. Die weiteren Erläuterungen setzen insbesondere diese Beschreibung als bekannt voraus und beschränken sich auf die im vorliegenden Falle besonders wesentlichen Zusammenhänge.

Ein als zentrales Steuerwerk CP bezeichneter zentraler Koordinationsprozessor wirkt unter anderem bei der Herstellung der über das zentrale Koppelfeld aufzubauenden Nachrichtenverbindungen mit. Er ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenden Koppelvielfache und Zwischenleitungen, sowie die darin jeweils belegten Kanäle. Diese Vermittlungsdaten werden mit Hilfe des zentralen Steuerwerkes, das also u.a. auch die Funktion einer Wegesucheinrichtung nebst Belegungsspeicher ausübt, erarbeitet und zur Koppelfeldeinstelleinrichtung KE des Koppelfeldes übertragen. Der die Vermittlungsdaten übertragende Datenfluß vom zentralen Steuerwerk CP zur Koppelfeldeinstelleinrichtung KE verläuft über eine mit dem zentralen Steuerwerk verbundene Puffereinrichtung, z.B. MB2, die einer Zwischenspeicherung und Umcodierung von Daten sowie einer Anpassung der Übertragungsgeschwindigkeit dient. Die Puffereinrichtung kann auf einen Teil dieser Funktionen oder auf jeweils nur eine dieser Funktionen beschränkt sein. Eine solche Puffereinrichtung ist zum Beispiel in der DE-PS 15 37 849 (VPA 67/3047) ausführlich beschrieben.

Außer dem Koordinationsprozessor CP ist eine größere Anzahl von jeweils auch als Teilsteuerwerk bezeichneten dezentralen Steuereinrichtungen GP1 bis GPn dargestellt, die den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber beschreibt auch die bereits angegebene DE-OS 28 26 113.

Die dezentralen Steuereinrichtungen GP1 bis GPn stehen mit dem zentralen Steuerwerk CP über Steuerkanäle in Verbindung, die einzeln pro dezentrale Steuereinrichtung über das Koppelfeld (K) bis zu einer Puffereinrichtung, z.B. MB2, durchgeschaltet sind. Von dieser Puffereinrichtung führt also je ein eigener Steuerkanal zu jeder der dezentralen Steuereinrichtungen. Hierzu ist die Puffereinrichtung über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexleitung m ist also an einen Koppelfeldanschluß wie den mit A bezeichneten angeschaltet. Sie umfaßt eine Mehrzahl von Steuer-Kanälen. Die Puffereinrichtung dient allen diesen Steuerkanälen, ist also gemeinsam für sie vorgesehen. Die zu jeweils einer Puffereinrichtung, z.B. MB2, führenden Steuerkanäle sind über den in der Zeichnung dargestellten Teil des zentralen Koppelfeldes (K), das ja aus mehreren solchen Teilen bestehen kann (s.o.!), mit den an diesen Teil angeschlossenen Anschlußgruppen, z.B. LTG1 bis LTGn, verbunden. Gegebenenfalls weiteren solchen Teilen gehören die Puffereinrichtungen MB1 und MB8 an.

Jede Verbindung zwischen einer Puffereinrichtung und den Teilsteuerwerken einer jeden der Anschlußgruppen, zum Beispiel der Anschlußgruppe LTG1, verläuft über einen Steuerkanal zur Übertragung von Steuersignalen von der Puffereinrichtung zur betreffenden Anschlußgruppe und zur Übertragung von Informationen in der umgekehrten Richtung. Jeder Steuerkanal besteht - genauer besehen - bekanntlich aus einem Paar von Übertragungskanälen von denen je einer für die eine und je ein weiterer für die andere der jeweils zwei vorgegebenen Übertragungsrichtungen vorgesehen ist.

Das in der Zeichnung dargestellte Ausführungsbeispiel zeigt also eine zentralgesteuerte Fernmeldevermittlungsanlage, und zwar eine PCM-Fernsprechvermittlungsanlage, mit einem u.a. ein zentrales Koppelfeld und einen zentralen Koordinationsprozessor umfassenden Zentralteil. Ferner sind mit dem zentralen Koppelfeld dezentrale Anschlußgruppen verbunden, und zwar über zur Herstellung gewählter Verbindungen belegbare Verbindungswege, z.B. Leitungen, Kanäle o.dgl. Diese führen in der jeweiligen Anschlußgruppe zu einem zu dieser gehörenden Teilkoppelfeld. Einer Verbindungsdurchschaltung über dieses dient ein Teilsteuerwerk in der jeweiligen Anschlußgruppe. Die Anschlußgruppe ist mit Teilnehmerleitungen und Verbindungsleitungen bzw. ihnen entsprechenden, in Übertragungssystemen, z.B. PCM-30-System, zusammengefaßten Kanälen beschaltet. Von dem Teilsteuerwerk einer Anschlußgruppe verläuft über das zu ihr gehörende Teilkoppelfeld, über einen der genannten Verbindungswege und über das zentrale Koppelfeld ein Steuerkanal, der bei Betriebsbeginn durchgeschaltet und während des Betriebes ständig im durchgeschalteten Zustand bereitgehalten wird, und über den zum Austausch von Informationen und Steuersignalen für den laufenden Vermittlungsbetrieb das Teilsteuerwerk Zugang zum Koordinationsprozessor und dieser jederzeit Zugriff zu dem Teilsteuerwerk hat. Zu dessen Durchschaltung über das Teilkoppelfeld können im Teilsteuerwerk bereits vor seiner Inbetriebnahme bestimmte Daten gespeichert sein, die bei seiner Inbetriebnahme die Durchschaltung des Steuerkanals vom Teilsteuerwerk über das betreffende Teilkoppelfeld bewerkstelligen, welcher weiter über das Koppelfeld (K) zur Puffereinrichtung (MB) verläuft und den Datenaustausch mit dem Koordinationsprozessor in der angegebenen Weise ermöglicht.

Die Durchschaltung und die Aufrechterhaltung der erläuterten Steuerkanäle, die als semipermanente Verbindungen bezeichnet werden, über das zentrale Koppelfeld (K) erfolgt mit Hilfe der Koppelfeldeinstelleinrichtung KE in der gleichen Weise wie die Herstellung und die Aufrechterhaltung von Nachrichtenverbindungen, zum Beispiel Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen, bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie in der bereits genannten DE-OS 28 26 113 erläutert ist, werden über das Teilkoppelfeld TSU der Anschlußgruppe LTG1 außer Nachrichtenverbindungen von und zu Teilnehmerstellen sowie Verbindungsleitungen auch die bereits erwähnten Verbindungen für die Steuerkanäle zwischen den den Anschlußgruppen, zum Beispiel LTG1, zugeordneten dezentralen Steuereinrichtungen, zum Beispiel GP1, einerseits und dem zentralen Steuerwerk CP andererseits hergestellt. Diese Verbindungen verlaufen, wie bereits dargelegt, weiterhin über das zentrale Koppelfeld (K) und die Zeitmultiplexleitung m.

Wie ausgeführt wurde, ist außer dem zentralen Koppelfeld K eine Anzahl von Anschlußgruppen LTG1 bis LTGn vorgesehen. Jede dieser Anschlußgruppen ist je über eine PCM-Leitung, zum Beispiel ltg1, an einen Koppelfeldanschluß, zum Beispiel A, des Koppelfeldes K in der beschriebenen Weise angeschlossen. Diese PCM-Leitung pro Anschlußgruppe führt innerhalb derselben zu einer Durchschalteeinrichtung TSU. Bei dieser Durchschalteanordnung handelt es sich um das bereits genannte Teilkoppelfeld, über das sowohl die genannten Steuerkanäle als auch die Verbindungen von und zu Teilnehmern und von und zu Verbindungsleitungen durchgeschaltet werden. Unter "Verbindungsleitungen" sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, zum Beispiel Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Teilnehmeranschlußschaltungen zum Anschluß von Teilnehmerleitungen, Leitungsabschlußschaltungen zum Anschluß von ankommend und/oder abgehend belegbaren Orts- und Fernverbindungsleitungen, Internverbindungssätze, Wahlempfangssätze und dergleichen sind teilnehmerindividuelle und/oder verbindungsindividuelle Schalteinrichtungen. Das Teilsteuerwerk nun dient in an sich bekannter Weise zur Abwicklung der Aufnahme der zuvor erwähnten, über diese Schalteinrichtungen eintreffenden verbindungsindividuellen Informationen. Ein Teilsteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Teilsteuerwerk jeweils individuell zugeordneten Speicher SP zwischengespeichert und zwar mit Hilfe einer Eingabe-Ausgabe-Einrichtung IOP. Ferner hat das Teilsteuerwerk die Aufgabe, Signale und Steuersignale über diese Leitungen (Teilnehmerleitungen und Verbindungsleitungen, sowie Kanäle) zur Aussendung zu bringen, zum Beispiel Rufwechselstromimpulse und Hörtonsignale über Teilnehmerleitungen sowie Wahlkennzeichen und Leitungszeichen und dergleichen über abgehend belegte Verbindungsleitungen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) in Richtung zum zentralen Koppelfeld (K) hin als auch von diesem abgehend zu einer solchen Leitung durchgeschaltet. Bei einer Verbindungsherstellung erfolgt zunächst eine Durchschaltung zum Beispiel von einer Teilnehmerleitung über das Teilkoppelfeld der betreffenden Anschlußgruppe zum zentralen Koppelfeld K. Die für die weitere Durchschaltung der betreffenden Verbindung über dieses Koppelfeld erforderlichen Informationen, z.B. Wahlinformationen, werden vom Gruppensteuerwerk über den betreffenden, bereits erwähnten Steuerkanal zum zentralen Koordinations-Prozessor CP übertragen. In umgekehrter Richtung überträgt dieser Steuersignale zu jedem der Teilsteuerwerke. Hierbei wirkt ein Eingabe-Ausgabe-Prozessor G mit, dessen Aufbau und Funktionsweise in der DE-OS 31 28 365 (VPA 81 P 6257) bereits ausführlich erläutert ist.

Jedes Teilsteuerwerk hat Zugang zum Koordinationsprozessor und dieser hat jederzeit Zugriff zu jedem der Teilsteuerwerke. Hierzu kann der zentrale Koordinationsprozessor in zyklischer Folge nacheinander sämtliche Teilsteuerwerke auf ein Vorliegen von Informationen abfragen. Diese Weiterleitung der Informationen kann auch auf andere bekannte Weise erfolgen. Der zentrale Koordinationsprozessor nimmt also ganz allgemein Informationen herein und gibt Steuersignale aus. Die Übertragung von Informationen und Steuersignalen über den Steuerkanal einer jeden der Anschlußgruppen erfolgt in an sich bekannter Weise.

Für den laufenden Vermittlungsbetrieb werden diese Informationen und Steuersignale in Portionen begrenzten Umfanges übertragen, also in einem geeigneten vorgegebenen Datenformat, das den Bedingungen des laufenden Vermittlungsbetrtiebs optimal angepaßt ist. Hierbei ist ein entsprechend gesichertes Übertragungsverfahren wesentlich. Weitere Einzelheiten hierüber können der europäischen Patentschrift 0 058 750 (VPA 81 P 6209), sowie der bereits oben angeführten deutschen Offenlegungsschrift 3 128 365 entnommen werden. Dies betrifft insbesondere den Aufbau und die Arbeitsweise des in der Zeichnung in weiteren Einzelheiten dargestellten Eingabe-Ausgabe-Prozessors G, der die Übertragung der genannten Informationen und Steuersignale von und zu den Anschlußgruppen abwickelt. Die Leistungsfähigkeit der den Anschlußgruppen individuell zugeordneten Steuerkanäle ist der Stärke des Flusses von Informationen und Steuersignalen im laufenden Vermittlungsbetrieb angepaßt.

Wie bereits ausgeführt wurde, sind in jedem in Betrieb befindlichen Teilsteuerwerk Daten gespeichert, die zur Abwicklung des Vermittlungsbetriebs erforderlich sind. Diese umfassen u.a. Programminformationen; diese stellen eine Grundinformation dar, die jedes Teilsteuerwerk haben muß, damit es hinsichtlich des Vermittlungsbetriebes, d.h. der Durchführung der Verbindungsherstellungsvorgänge in Betrieb genommen werden kann. Die für ein Teilsteuerwerk zur Abwicklung des gesamten Vermittlungsbetriebes erforderliche Programminformation ist also für die Abwicklung des laufenden Vermittlungsbetriebes erforderlich.

Zweckmäßigerweise wird die für das Teilsteuerwerk zur Abwicklung des Vermittlungsbetriebes erforderliche gesamte Programminformation im Teilsteuerwerk in Zusammenhang mit seiner Inbetriebnahme eingespeichert. Desgleichen werden zweckmäßigerweise die ebenfalls zur Abwicklung des Vermittlungsbetriebes erforderlichen und u.a. die Beschaltung der Anschlußgruppe mit Teilnehmer- und/oder Verbindungsleitungen angebenden obengenannten Anschlußdaten in einem Teilsteuerwerk erst gespeichert, wenn es in Betrieb genommen wird. Diese in jedem der Teilsteuerwerke zu speichernden Programminformationen sowie die ebenfalls zu speichernden Anschlußdaten werden - wie oben bereits erläutert wurde - an ein in Betrieb gehendes Teilsteuerwerk vom zentralen Koordinationsprozessor übertragen. Um mit der Übertragung dieser gesamten Programminformation und der Anschlußdaten an die Anschlußgruppen nicht zu viel Zeit von der Inbetriebnahme bzw. Wiederinbetriebnahme bis zum Beginn des Vermittlungsbetriebs zu verlieren, ist erfindungsgemäß vorgesehen, daß die Übertragung der Peripheriedaten an jede der Anschlußgruppen in einen vor jeweiligem Beginn ihres vermittlungstechnischen Betriebsablaufes durchgeführten ersten Übertragungsprozeß einerseits und einen zweiten Übertragungsprozeß nach Beginn des vermittlungstechnischen Betriebsablaufes andererseits unterteilt ist. Der erste Übertragungsprozeß beschränkt die Übertragung der Peripheriedaten zunächst auf die der Programminformationen. Nach einer Inbetriebnahme bzw. Inbetriebnahme überträgt der Koordinationsprozessor also zunächst nur die Programminformationen, soweit diese nicht bereits in den Anschlußgruppen gespeichert vorliegen, also bei der Herstellung einer Anschlußgruppe schon permanent eingespeichert worden sind. Der zweite Übertragungsprozeß ist in eine Vielzahl einzelner Übertragungs-Teilvorgänge aufgeteilt. Diese umfassen sämtliche Anschlußdaten, die an die Anschlußgruppen zu übertragen sind. Es kann sich also hierbei auch um eine Inbetriebnahme nur einer einzigen Anschlußgruppe handeln. Vorzugsweise aber hat die Erfindung Bedeutung für Betriebsfälle, in denen es um eine Inbetriebnahme bzw. Wiederinbetriebnahme der gesamten Fernsprechvermittlungsanlage geht, also der Gesamtheit aller Anschlußgruppen.

Die genannte Vielzahl einzelner Übertragungs-Teilvorgänge im zweiten Übertragungsprozeß betrifft also die Anschlußdaten. Diese Übertragungs-Teilvorgänge sind während des bereits gestarteten Betriebsablaufes so in den diesem dienenden vermittlungstechnischen Datenaustausch zwischen Koordinationsprozessor und Teilsteuerwerken eingefügt, daß bei jeweils erstmalig nach dem betreffenden Beginn des vermittlungstechnischen Betriebsablaufes erfolgender ankommender oder abgehender Belegung jeweils einer der Leitungsabschlußschaltungen bzw. eines der entsprechenden angeschalteten Kanäle die jeweils betreffenden Anschlußdaten einzeln vom Koordinationsprozessor aus einem zu ihm gehörenden Anschlußdatenspeicher AD abgerufen und zu der jeweils betreffenden Anschlußgruppe übertragen und in deren Speicher (s.o.) gespeichert werden.

Es wird also bereits nach einer Übertragung der zu den Peripheriedaten gehörenden Programminformationen, die aus einem zum Koordinationsprozessor gehörenden Programmspeicher PD abgerufen und an sämtliche Anschlußgruppen ausgesendet werden (Broadcastverfahren), der vermittlungstechnische Betriebsablauf bereits gestartet. Immer wenn dann ein Anschluß an einer Anschlußgruppe von einer Verbindungsherstellung betroffen wird, werden zunächst die für den jeweils betreffenden Anschluß erforderlichen Anschlußdaten vom Koordinationsprozessor CP an die betreffende Anschlußgruppe übertragen und hier vom betreffenden Teilsteuerwerk in der angegebenen Weise pro Anschluß gespeichert. Bei der Belegung eines Anschlusses kann es sich um einen Teilnehmeranruf, um die Belegung eines angewählten Teilnehmeranschlusses, um eine ankommende Belegung einer Verbindungsleitung, um eine abgehende Belegung einer Verbindungsleitung oder um entsprechende Belegungen von Kanälen handeln. In diesem Zusammenhang ist es möglich, daß die leitungsindividuellen, bzw. kanalindividuellen Anschlußdaten von dem jeweils betreffenden Teilsteuerwerk zunächst angefordert werden. Eine entsprechende Anforderung ergeht also an den Koordinationsprozessor, der bei einer neuen Verbindungsherstellung zunächst die angeforderten Anschlußdaten zum Teilsteuerwerk der betreffenden Anschlußgruppe hin überträgt. Diese Anschlußdaten werden in der weiter oben beschriebenen Weise gespeichert und stehen von da an für alle weiteren Verbindungsherstellungsvorgänge und entsprechenden vermittlungstechnischen Betriebsabläufe (zum Beispiel Gebührenzählung, Verbindungsauslösung und dergleichen) zur Verfügung.

Durch die Aufteilung des erfindunsgemäßen zweiten Übertragungsprozesses in eine Vielzahl einzelner Übertragungs-Teilvorgänge, die in der angegebenen Weise nach einer Inbetriebnahme bzw. Wiederinbetriebnahme vorerst immer in Zusammenhang mit jeweils einer Verbindungsherstellung und mit dem betreffenden, diesem dienenden vermittlungstechnischen Datenaustausch abgewickelt werden, wird zwar der vermittlungstechnische Betriebsablauf, das heißt die Gesamtheit der nacheinander abgewickelten Verbindungsherstellungsvorgänge, geringfügig verlangsamt; auch wird hierbei die Verkehrsbelastung des Koordinationsprozessors sowie der Teilsteuerwerke vorübergehend etwas erhöht, indem zu den durch die Vermittlungsschaltvorgänge bedingten Verarbeitungsprozeduren im Koordinationsprozessor sowie in den Teilsteuerwerken und den Übertragungsvorgängen zischen diesen jeweils die genannten Übertragungs-Teilvorgänge hinzu kommen. Zugleich aber wird durch die Erfindung dabei auch erreicht, daß nach einer Inbetriebnahme bzw. Wiederinbetriebnahme der beschriebenen Fernsprechvermittlungsanlage der tatsächliche Beginn des vermittlungstechnischen Betriebsablaufes wesentlich früher eintreten kann, als in bekannten Fernsprechvermittlungsanlagen ähnlicher Art. Nach der Inbetriebnahme bzw. Wiederinbetriebnahme braucht lediglich die Programminformation zu den Anschlußgruppen hin übertragen zu werden. Danach kann bereits der Vermittlungsbetrieb gestartet werden. Nach einer Anlaufphase von z.B. einer halben Stunde oder einer ganzen Stunde kann dann veranlaßt werden, daß der Koordinationsprozessor sämtliche noch fehlenden Anschlußdaten in die Anschlußgruppen überträgt, wo diese Anschlußdaten dann in der angegebenen Weise gespeichert werden. Dies kann auch hinausgeschoben werden auf Zeiten schwächerer Verkehrsbelastung, zum Beispiel nach Ablauf der Hauptverkehrsstunde oder in die Nachtstunden.

Die durch die erfindungsgemäße Betriebsweise und die entsprechenden Einzelmaßnahmen erzielte Zeitersparnis kommt besonders vorteilhaft zum Tragen in Betriebsfällen mit solchen kurzzeitigen Betriebsunterbrechungen, in deren Zusammenhang auch eine erneute Übertragung der Peripheriedaten vom Zentralprozessor an die Teilsteuerwerke notwendig wird, was insbesondere auch gilt für Betriebsfälle, in denen während des laufenden Vermittlungsbetriebes aufgrund von eingetretenen Störungen oder festgestellten Fehlern in der Funktionsweise oder in den Peripheriedaten Abhilfemaßnahmen erforderlich werden. Ebenso wird auch bei gezielten Änderungen in der Arbeitsweise und/oder der Beschaltung der Anschlußgruppen sowie der Betriebsweise von Teilnehmeranschlüssen und Verbindungsleitungen, bzw. entsprechenden Kanälen, eine Übertragung der betreffenden Peripheriedaten - i.d.R. sogar der Gesamtheit der Peripheriedaten oder nur der der Anschlußdaten - vom Zentralprozessor an die Teilsteuerwerke der Anschlußgruppen erforderlich. Die erzielte Zeitersparnis ergibt sich also ganz allgemein durch eine Vermeidung einer Verzögerung des Beginns des Vermittlungsbetriebes in allen solchen Betriebsflällen, in denen auch eine Übertragung der Anschlußdaten und gegebenenfalls auch der Programminformation vom jeweiligen zentralen Prozessor zu den Anschlußgruppen erforderlich ist. Durch die Erfindung wird erreicht, daß möglichst bald nach Inbetriebnahme, Wiederinbetriebnahme (wegen eingetretener Betriebsunterbrechung) oder nach einer ähnlichen Maßnahme der Vermittlungsbetrieb zur Herstellung von teilnehmerseitig gewählten Verbindungen beginnen kann.

Es sei auch noch auf die grundsätzliche zusätzliche Möglichkeit hingewiesen, daß Teilnehmerstationen ähnlich wie in der deutschen Offenlegungsschrift 36 34 863 (VPA 86 P 1763) beschrieben an Konzentratoren (Kt) angeschlossen sein können, welche ihrerseits über PCM-Leitungen mit Anschlußgruppen der weiter oben beschriebenen Art verbunden sind.

## Patentansprüche

1. Verfahren zum Betrieb einer Schaltungsanordnung für eine zentralgesteuerte Fernmeldevermittlungsanlage, insbesondere PCM-Fernsprechvermittlungsanlage, mit einem ein Zentralkoppelfeld (RZE, R, RZA), und einen zentralen Koordinationsprozessor (CP) umfassenden Zentralteil und mit dezentralen Anschlußgruppen, die je ein mit dem Zentralkoppelfeld über zur Herstellung gewählter Verbindungen belegbare Verbindungswege, zum Beispiel Leitungen, Kanäle oder dergleichen, verbundenes Teilkoppelfeld, (TSU), sowie ein u.a. einer Verbindungsdurchschaltung über dieses dienendes programmgesteuertes Teilsteuerwerk (GP1 bis GPn) umfassen, und an die über verbindungsindividuelle und/oder teilnehmerindividuelle Leitungsabschlußschaltungen (LTU1 bis LTU8) Teilnehmerleitungen und/oder Verbindungsleitungen angeschlossen, bzw. ihnen entsprechende, in Übertragungssystemen, zum Beispiel PCM-Systemen, zusammengefaßte Kanäle angeschaltet sind, und mit einem von dem Koordinationsprozessor zu den Teilsteuerwerken verlaufenden Steuerkanal, insbesondere mit gleichartig verlaufenden, einzeln pro Teilsteuerwerk vorgesehenen Steuerkanälen, über den, insbesondere über die vom Koordinationsprozessor in Zusammenhang mit dem vermittlungstechnischen Betriebsbeginn jeweils einer Anschlußgruppe aus einem diesem Prozessor zugeordneten zentralen Speicher (PD, AD) entnommene Peripheriedaten zu jener hin übertragen werden, zu denen jeweils dezentraler semipermanenter Speicherung dieser Anschlußgruppe ein Speicher (MU) zugeordnet ist, und die teils Programminformationen für ihre vermittlungstechnischen Programmsteuerungsabläufe sind, und teils den Leitungsabschlußschaltungen (LTU1 bis LTU8) bzw. den angeschalteten Kanälen, individuell zugeordnete und für den Vermittlungsbetrieb im Einzelfall vermittlungssteuerungstechnisch maßgebliche Anschlußdaten sind, wie zum Beispiel Teilnehmerrufnummer-Teilnehmeranschlußlage-Zuordnungsdaten, Betriebszustandsdaten, Betriebskategorien-Daten, Teilnehmerart-Daten, Verbindungsleitungs- und -kanalartdaten und dergleichen,
**dadurch gekennzeichnet,**
daß die Übertragung der Peripheriedaten an jede der Anschlußgruppen (LTG1 bis LTGn) in einen vor jeweiligem Beginn ihres vermittlungstechnischen Betriebsablaufes durchgeführten ersten Übertragungsprozeß einerseits und einen zweiten Übertragungsprozeß nach Beginn des vermittlungstechnischen Betriebsablaufes andererseits unterteilt ist, und daß der erste Übertragungsprozeß die Übertragung der Peripheriedaten zunächst auf die der Programminformationen beschränkt, und daß der zweite Übertragungsprozeß in eine Vielzahl einzelner Übertragungs-Teilvorgänge aufgeteilt ist, die während des bereits gestarteten Betriebsablaufes so in den diesem dienenden vermittlungstechnischen Datenaustausch zwischen dem Zentralprozessor (CP) und den Teilsteuerwerken (GP1 bis GPn) eingefügt sind, daß bei jeweils erstmalig nach dem betreffenden Beginn des vermittlungstechnischen Betriebsablaufes erfolgender ankommender oder abgehender Belegung jeweils einer der Leitungsabschlußschaltungen (LTU1 bis LTU8) bzw. eines der entsprechenden angeschalteten Kanäle, jeweils sämtliche der betreffenden leitungsindividuellen, bzw. kanalindividuellen Anschlußdaten, die gegebenenfalls von dem jeweils betreffenden Teilsteuerwerk (GP1 bis GPn) zunächst angefordert werden, vom Zentralprozessor (CP) einzeln, d.h. pro Leitungsabschlußschaltung, bzw. pro entsprechenden Kanal, vom Zentralprozessor (CP) zu der jeweils betreffenden Anschlußgruppe(LTG1 bis LTGn) übertragen und in deren Speicher (MU) gespeichert werden.

2. Verfahren nach Anspruch 1,
**dadurch gekennzeichnet,**
daß der erste Übertragungsprozeß für mehrere, insbesondere für alle Anschlußgruppen (LTG1 bis LTGn) gleichzeitig stattfindet, insbesondere nach einem Broadcast-Verfahren, dagegen der zweite Übertragungsprozeß aufgeteilt in die Übertragungs-Teilvorgänge individuell pro Anschlußgruppe.

3. Verfahren nach Anspruch 1,
**dadurch gekennzeichnet,**
daß ein Teil der in den Speichern (MU) der Anschlußgruppen (LTG1 bis LTGn) zu speichernden Programminformationen permanent, z.B. bereits bei der Herstellung gespeichert werden.

## Claims

1. Method for operating a circuit arrangement for a centrally controlled telecommunication switching system, particularly a PCM telephone switching system, having a central section comprising a central switching network (RZE, R, RZA) and a central coordination processor (CP), and having decentralised line trunk groups which each comprise a group switch (TSU) connected to the central switching network via connecting paths which can be seized for establishing dialled connections, for example lines, channels or the like, and a program-controlled group processor (GP1 to GPn) used for, among other things, switching through a connection via this group switch, and to which subscriber lines and/or connecting lines are connected, or channels corresponding to these and combined in transmission systems, for example PCM systems, are connected, via connection-individual and/or subscriber-individual line termination units (LTU1 to LTU8), and having a control channel extending from the coordination processor to the group processors, particularly with control channels extending in a similar manner and provided individually per group processor, via which control channel, particularly via which control channels, peripheral data taken from a central memory (PD, AD) allocated to this processor, are transmitted in conjunction with the beginning of switching operation of in each case one line trunk group, to the latter by the coordination processor, for the in each case decentralised semipermanent storage of which a memory (MU) is allocated to this line trunk group, and which are partly program information items for their switching program control sequences, and are partly connecting data which are individually allocated to the line termination units (LTU1 to LTU8) or respectively to the connected channels and are switching-control-determining for the switching operation in the individual case, such as, for example, subscriber directory number/subscriber line location correlation data, operating status data, operating category data, subscriber type data, connecting line and channel type data and the like, characterised in that the transmission of the peripheral data to each of the line trunk groups (LTG1 to LTGn) is subdivided into a first transmission process carried out before the respective beginning of its switching operation sequence on the one hand, and a second transmission process after the beginning of the switching operation sequence on the other hand, and in that the first transmission process initially limits the transmission of the peripheral data to that of the program information items, and in that the second transmission process is divided into a multiplicity of individual transmission subprocesses which are inserted during the operation sequence already started into the switching data exchange, used for this operation sequence, between the central processor (CP) and the group processors (GP1 to GPn) in such a manner that with an incoming or outgoing seizure, in each case occurring for the first time after the relevant beginning of the switching operation sequence, of in each case one of the line termination units (LTU1 to LTU8) or respectively of one of the corresponding connected channels, in each case all of the relevant line-individual or channel-individual connection data which may first be requested by the in each case relevant group processor (GP1 to GPn) are transmitted individually, that is to say for each line termination unit or for each corresponding channel, from the central processor (CP) to the in each case relevant line trunk group (LTG1 to LTGn) and are stored in the memory (MU) of the latter.

2. Method according to Claim 1, characterised in that the first transmission process occurs simultaneously for several, particularly for all line trunk groups (LTG1 to LTGn), particularly in accordance with a broadcast method, but the second transmission process occurs individually per line trunk group, divided into the transmission subprocesses.

3. Method according to Claim 1, characterised in that some of the program information items to be stored in the memories (MU) of the line trunk groups (LTG1 to LTGn) are stored permanently, for example even during the manufacture.

## Revendications

1. Procédé pour faire fonctionner un montage pour une installation de commutation de télécommunication à commande centrale, notamment une installation de commutation téléphonique MIC, comportant une partie centrale comprenant un champ de couplage central (RZE,RS,RZA) et un processeur central de coordination (CP), et comportant des modules de raccordement décentralisés, qui comprennent chacun un champ de couplage partiel (TSU), qui est raccordé au champ de couplage central par l'intermédiaire de voies de liaison pouvant être occupées pour l'établissement de liaisons sélectionnées, par exemple des lignes et des canaux analogues, ainsi qu'une unité de commande partielle (GP1 à GPn) commandée par un programme et utilisée notamment pour une transmission directe de liaison par l'intermédiaire de ce champ de couplage partiel, et auxquels des lignes d'abonnés et/ou des lignes de jonction sont raccordées ou des canaux, qui leur correspondent et sont rassemblés dans des systèmes de transmission, par exemple des systèmes MIC, par l'intermédiaire de circuits de raccordement de lignes (LTU1 à LTU8) prévus individuellement par liaison et/ou individuellement par abonné, et comportant un canal de commande qui relie le processeur de coordination aux unités de commande partielle, notamment avec des canaux de commande de même type, qui sont prévus individuellement pour chaque unité de commande partielle et au moyen duquel et notamment au moyen desquels des données de la périphérie, qui sont prélevées par le processeur de coordination, en liaison avec le début du fonctionnement technique de commutation d'un module de raccordement respectif, à partir d'une mémoire centrale (PD,AD), associée à ce processeur, sont transmises à ce module de raccordement, données, pour la mémorisation semi-permanente décentralisée respective desquelles une mémoire (MU) est associée à ce module de raccordement et qui sont en partie des informations de programme pour leur cycle de commande de programme technique de commutation, et sont en partie des données de raccordement associées individuellement aux circuits de raccordement de lignes (LTU1 à LTU8) ou aux canaux raccordés, et sont déterminantes du point de vue de la technique de commutation et de commande pour le fonctionnement de commutation dans chaque cas individuel, comme par exemple des données d'association numéro d'appel d'abonné-position de raccordement d'abonné, des données d'états de fonctionnement, des données de catégories de fonctionnement, données de types d'abonnés, des données de types de lignes de jonction et des canaux de jonction et analogues,
caractérisé par le fait
que la transmission des données périphériques à chacun des modules de raccordement (LTG1 à LTGn) est subdivisée d'une part en un premier processus de transmission exécuté avant le début respectif du cycle de fonctionnement technique de commutation du module et d'autre part, en un second processus de transmission après le début du cycle de fonctionnement technique de commutation, et que le premier processus de transmission limite la transmission des données périphériques tout d'abord à la transmission des informations de programmes et que le second processus de transmission est subdivisé en une multiplicité de processus partiels individuels de transmission, qui sont insérés, pendant le cycle de fonctionnement déjà déclenché, dans l'échange de données techniques de commutation utilisé pour ce cycle, entre le processeur central (CP) et les unités de commande partielle (GP1 à GPn), de sorte que, dans le cas d'une occupation à l'arrivée ou au départ, qui se produit respectivement pour la première fois après le début considéré du cycle de fonctionnement technique de commutation, de respectivement l'un des circuits de raccordement de lignes (LTU1 à LTU8) ou de l'un des canaux raccordés correspondants, respectivement toutes les données de raccordement concernées, prévues individuellement pour chaque ligne ou individuellement pour chaque canal et qui sont éventuellement tout d'abord demandées par l'unité de commande partielle respectivement considérée (GP1 à GPn), sont transmises par le processeur central (CP) individuellement, c'est-à-dire pour chaque circuit de raccordement de ligne ou pour chaque canal correspondant, par le processeur central (CP) au module de raccordement respectivement considéré (LTG1 à LTGn) et sont mémorisées dans leur mémoire (MU).

2. Procédé suivant la revendication 1, caractérisé par le fait
que le premier processus de transmission est exécuté simultanément pour plusieurs et notamment pour tous les modules de raccordement (LTG1 à LTGn), notamment selon un procédé de radiodiffusion, tandis que le second processus de transmission est subdivisé en les processus partiels de transmission individuellement pour chaque module de raccordement.

3. Procédé suivant la revendication 1, caractérisé par le fait
qu'une partie des informations de programme devant être mémorisées dans les mémoires (MI) des modules de raccordement (LTG1 à LTGn) est mémorisée de façon permanente, c'est-à-dire déjà lors de la fabrication.
